# EUROPÄISCHE PATENTSCHRIFT

(11) **EP 3 283 223 B1**
(45) Veröffentlichungstag und Bekanntmachung des Hinweises auf die Patenterteilung: **10.04.2019**
(21) Anmeldenummer: 16712719.0
(22) Anmeldetag: 18.02.2016
(51) Int. Cl.: B02C 17/16, B02C 17/24, F16H 7/12

(54) **SPANNVORRICHTUNG FÜR EINE RÜHRWERKSKUGELMÜHLE MIT RIEMEN- ODER KETTENANTRIEB UND RÜHRWERKSKUGELMÜHLE**
TENSIONING DEVICE FOR A STIRRING BALL MILL WITH A BELT OR CHAIN DRIVE AND STIRRING BALL MILL
DISPOSITIF TENDEUR POUR UN BROYEUR À AGITATEUR À BILLES AVEC ENTRAÎNEMENT À COURROIE OU À CHAÎNE ET BROYEUR À AGITATEUR À BILLES

(30) Priorität: 14.04.2015 DE 102015105655
(43) Veröffentlichungstag der Anmeldung: 21.02.2018
(73) Patentinhaber: NETZSCH-Feinmahltechnik GmbH, 95100 Selb (DE)
(72) Erfinder: RATH, Philipp, 95100 Selb (DE); BETZL, Martin, 95652 Waldsassen (DE)
(86) Internationale Anmeldenummer: PCT/DE2016/000064
(87) Internationale Veröffentlichungsnummer: WO 2016/165680

(56) Entgegenhaltungen:
- EP-A1- 2 777 815
- US-A- 3 995 818
- US-A- 4 767 383

## Beschreibung

Die vorliegende Erfindung betrifft eine Spannvorrichtung für eine Rührwerkskugelmühle mit Riemen- oder Kettenantrieb und eine Rührwerkskugelmühle gemäß den Merkmalen der Oberbegriffe der Ansprüche 1 und 12.

### Stand der Technik

Die Erfindung betrifft eine Rührwerkskugelmühle, bei der die Rührwelle des Rührwerks über einen Riemen- oder Kettenantrieb angetrieben wird. Herkömmlicherweise werden zum Antrieb von Rührwerken Getriebe eingesetzt, die einen hohen Platzbedarf haben und ölgeschmiert sind, was zu Verschmutzungen durch austretendes Getriebeöl führen kann. Weiterhin müssen für Drehzahländerungen jeweils gesondert ausgelegte Getriebe eingesetzt werden, wodurch hohe Kosten entstehen.

Zur Senkung der Kosten ist bekannt, die Rührwelle drehantreibbar über einen Riementrieb, insbesondere einen Zahn- oder Keilriementrieb zu betreiben.

DE 29710013 U1 beschreibt ein Rührwerk, bei dem der Antrieb ein Riemenantrieb ist. In diesem Dokument wird eine Riemenspannungs-Verstelleinrichtung beschrieben, die ein Festlager und ein in axialer Richtung beabstandetes Loslager aufweist.

DE 102008045887 A1 beschreibt einen riemengetriebenen Tauchmischer mit einem vorzugsweise rund ausgebildeten Glockengehäuse, zu dem die Flügelradwellenmitte exzentrisch angeordnet ist und wobei das Glockengehäuse mit einer zusammenwirkenden runden Anordnung in einem Verbindungsgehäuse zusammenpasst. Der Riemen des Riemenantriebs wird nach Platzieren auf den Riemenscheiben gespannt, indem das Glockengehäuse mit dem Verbindungsgehäuse zusammengefügt wird. Durch Verdrehen der beiden Gehäuse relativ zueinander kann die notwendige Spannung auf den Riemen aufgebracht werden. Weitere Beispiele der Spannvorrichtungen sind in US 4767383, EP 2777815 A1 und US 3995818 offenbart. Weitere bekannte Riemenspannsysteme werden beispielsweise durch die Firma ROSTA vertrieben. Problematisch an den bekannten Systemen ist insbesondere, dass jeweils zwei Personen notwendig sind, um die Riemenspannung einzustellen, da eine Person die gewünschte Riemenspannung mit Hilfe eines geeigneten Werkzeugs einstellen und halten muss, während die andere Person die jeweilige Einstellung mittels Befestigungsschrauben oder Ähnlichem fixiert.

Die Aufgabe der Erfindung besteht darin, eine in eine Rührwerkskugelmühle integrierte Spannvorrichtung zu konstruieren, mittels derer schnell und einfach die Riemenspannung eines Riementriebs einer Rührwerkskugelmühle eingestellt werden kann.

Die obige Aufgabe wird durch Spannvorrichtung und eine Rührwerkskugelmühle gelöst, die die Merkmale in den Patentansprüchen 1 und 12 umfassen. Weitere vorteilhafte Ausgestaltungen werden durch die Unteransprüche beschrieben.

### Beschreibung

Die Erfindung betrifft eine Spannvorrichtung für den Riemen- oder Kettenantrieb einer Rührwerkskugelmühle sowie eine Rührwerkskugelmühle mit Riemen- oder Kettenantrieb und mit einer Spannvorrichtung für den Riemen- oder Kettenantrieb.

Bei der erfindungsgemäßen Rührwerkskugelmühle wird zur Übertragung der Antriebsenergie von einer Antriebswelle eines Motors zu einer Rührwerkswelle eines Rührwerks der Rührwerkskugelmühle ein Riemen oder eine Kette verwendet, der die Antriebswelle mit der Rührwerkswelle verbindet. Im Rahmen der Anmeldung wird der Begriff Riemen als Synonym für Riemen oder Kette oder ein anderes geeignetes Übertragungsmittel verwendet.

Um die jeweils notwendige Spannung auf den Riemen aufzubringen, umfasst die Spannvorrichtung einen an einem drehbeweglich ausgebildeten Spannfuß angeordneten Spannhebel mit einem daran angeordneten Spannrad.

Das Spannrad ist vorzugsweise korrespondierend zum Übertragungsmittel ausgebildet. Wird als Übertragungsmittel eine Kette verwendet, ist das Spannrad beispielsweise als Kettenrad ausgebildet und kann Außenzähne aufweisen, die in die Kettenglieder greifen. Ist das Übertragungsmittel als Riemen ausgebildet, so kann das Spannrad beispielsweise als eine Art Rolle ausgebildet sein.

An dem drehbeweglichen Spannfuß ist eine drehbewegliche Verstellscheibe angeordnet. Insbesondere ist die Verstellscheibe zwischen dem drehbeweglichen Spannfuß und dem Maschinengehäuse der Rührwerkskugelmühle angeordnet. Die Verstellscheibe ist vorzugsweise in ihrem Mittelpunkt drehbeweglich am Maschinengehäuse befestigt. Der Spannfuß ist derart an der Verstellscheibe angeordnet, dass ein Verdrehen der Verstellscheibe ein Verdrehen des Spannfußes bewirkt, was wiederum zu einer Verstellung der Spannhebels und einer Positionsänderung des Spannrads führt. Das Spannrad wird daraufhin mehr oder weniger stark gegen den Riemen gedrückt. Die Verstellscheibe weist eine Führungskulisse beziehungsweise Führungskontur auf. Beispielsweise ist die Führungskontur als Langloch ausgebildet. Besonders bevorzugt ist die Führungskontur als gebogenes Langloch ausgeführt.

Der Führungskontur der Verstellscheibe ist mindestens ein Befestigungsmittel zugeordnet, mit dem die Position der Verstellscheibe am Maschinengehäuse der Rührwerkskugelmühle festgelegt werden kann. Beispielsweise dient eine am Maschinengehäuse der Rührwerkskugelmühle und durch einen Bereich der Führungskontur der Verstellscheibe geführte Schraube als Befestigungsmittel.

Insbesondere ist vorgesehen, dass der Schraubenkopf einen größeren Durchmesser aufweist, als die die schmalen Seiten des Langlochs abschließenden Halbkreise. Dadurch wird sichergestellt, dass der Schraubenkopf nicht durch das Langloch hindurchrutschen kann. Dagegen weist der Schraubteil des Befestigungsmittels einen geringeren Durchmesser auf.

Soll die Verstellscheibe verdreht werden, dann wird das Befestigungsmittel zumindest soweit gelöst, dass die Verstellscheibe nicht mehr unbeweglich am Maschinengehäuse der Rührwerkskugelmühle fixiert ist, sondern um ihren Drehpunkt bewegt werden kann. Beim Verdrehen der Verstellscheibe wird die Führungskontur gegenüber dem Befestigungsmittel verstellt. Die Bewegung der Verstellscheibe wird dabei beispielsweise durch die Ausmaße des Langlochs begrenzt.

Durch die direkte Kopplung der Verstellscheibe mit dem Spannfuß und die direkte Kopplung des Spannfußes mit dem Spannhebel und dem Spannrad wird die Bewegung der Verstellscheibe auf das Spannrad übertragen, so dass das Spannrad mehr oder weniger stark gegen den Riemen gedrückt wird. Insbesondere führt eine Drehbewegung der Verstellscheibe zu einer Drehbewegung des Spannfußes, die ein Verschwenken des Spannhebels und somit ein Verschwenken des Spannrads bewirkt.

Nachdem die gewünschte Riemenspannung eingestellt ist, wird das Befestigungsmittel wieder angezogen und somit die Verstellscheibe in der eingestellten Position am Maschinengehäuse der Rührwerkskugelmühle fixiert.

Zum Einstellen der Verstellscheibe, insbesondere zum Verdrehen der Verstellscheibe gegenüber dem Maschinengehäuse der Rührwerkskugelmühle, umfasst die erfindungsgemäße Spannvorrichtung ein längenvariables Spannelement. Gemäß einer bevorzugten Ausführungsform der Erfindung ist das längenvariable Spannelement derart ausgebildet ist, dass eine Drehbewegung am Spannelement in eine lineare Stellbewegung des Spannelements umgewandelt wird. Das Spannelement greift an der Verstellscheibe an und überträgt die lineare Stellbewegung derart auf die Verstellscheibe, dass diese um ihren Drehpunkt am Maschinengehäuse der Rührwerkskugelmühle verdreht wird.

Gemäß einer Ausführungsform der Erfindung umfasst das längenvariable Spannelement eine Spannhülse und zwei Augenschrauben. Die Spannhülse wird insbesondere durch einen Hohlzylinder ausgebildet, der an seinem einen freien Ende zumindest teilweise ein erstes rechtsgängiges Innengewinde aufweist. An dem gegenüberliegenden freien Ende weist die Spannhülse zumindest teilweise ein zweites linksgängiges Innengewinde auf. Insbesondere sind das erste rechtsgängige Innengewinde und das zweite linksgängige Innengewinde auf gleicher Achse liegend angeordnet, wobei es sich vorzugsweise um die Längsachse der Spannhülse handelt.

Gemäß einer alternativen Ausführungsform der Erfindung umfasst das längenvariable Spannelement eine so genannte Spannhülse, die aus einem Vollmaterial gefertigt ist. Bei diesem Ausführungsbeispiel sind zwei einander gegenüberliegend angeordnete Innengewinde vorgesehen. Insbesondere sind die Innengewinde koaxial angeordnet und eines der Gewinde ist als Rechtsgewinde ausgebildet, während das andere Gewinde als Linksgewinde ausgebildet ist.

Analog dazu weist eine erste Augenschraube ein zum ersten rechtsgängigen Innengewinde korrespondierendes Außen- Rechtsgewinde auf. Dagegen weist die zweite Augenschraube ein zum zweiten linksgängigen Innengewinde korrespondierendes Außen- Linksgewinde auf.

Durch Drehen der Spannhülse in eine erste Drehrichtung werden die beiden Augenschrauben zusammengezogen, so dass sich das Spannelement verkürzt und eine erste Drehbewegung der Verstellscheibe in eine erste Verstell- Rotationsrichtung bewirkt. Durch Drehen der Spannhülse in eine zur ersten Drehrichtung entgegen gerichteten Gegenrichtung werden die beiden Augenschrauben voneinander entfernt, so dass sich das Spannelement verlängert und eine zweite Drehbewegung der Verstellscheibe in eine zweite Verstell- Rotationsrichtung bewirkt, wobei die zweite Verstell- Rotationsrichtung entgegengerichtet zur ersten Verstell- Rotationsrichtung ist.

Der besondere Vorteil einer solchen erfindungsgemäßen Spannvorrichtung für eine Rührwerkskugelmühle mit Riemen- oder Kettenantrieb beziehungsweise einer erfindungsgemäßen Rührwerkskugelmühle besteht darin, dass der Riemen- oder Kettenantrieb der Rührwerkskugelmühle weitgehend werkzeugfrei spannbar ist. Es wird lediglich ein Werkzeug benötigt, um das Befestigungsmittel zu lösen beziehungsweise wieder zu fixieren. Es wird jedoch kein zusätzliches Werkzeug benötigt, um den Spannfuß der Spannvorrichtung zu verstellen.

In Abhängigkeit von der Größe der Spannvorrichtung und / oder in Abhängigkeit von der Zugänglichkeit der Spannvorrichtung an der Rührwerkskugelmühle kann es vorteilhaft sein, die Spannvorrichtung mit Hilfe eines geeigneten Werkzeugs, beispielsweise mit Hilfe eines Gabelschlüssels oder Ähnlichem, entsprechend einzustellen.

Insbesondere sind für die Einstellung der Riemenspannung nunmehr nicht mehr zwei Personen notwendig, wobei eine Person die Riemenspannung einstellt und hält und die zweite Person die Einstellung durch diverse Befestigungsmittel fixiert. Stattdessen kann die Einstellung durch eine einzige Person erfolgen, da das Spannelement die aufgebrachte Riemenspannung selbständig hält und die Fixierung mit Hilfe des Befestigungsmittels nur noch eine Sicherungsfunktion erfüllt.

Sollte sich nunmehr im laufenden Betrieb der Rührwerkskugelmühle die Spannhülse des Spannelementes gegenüber den Augenschrauben des Spannelementes verdrehen, so dass es zu einer ungewünschten Längenänderung des Spannelements kommt, so bewirkt die Fixierung der Verstellscheibe am Maschinengehäuse der Rührwerkskugelmühle, dass sich die ungewünschte Längenänderung des Spannelementes im laufenden Betrieb der Rührwerkskugelmühle nicht auf den Spannfuß, den Spannhebel, das Spannrad und letztendlich den Riemen überträgt.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine erste Ausführungsform einer Rührwerkskugelmühle mit einer Spannvorrichtung gemäß dem bekannten Stand der Technik.
Figur 2 zeigt eine zweite Ausführungsform einer Rührwerkskugelmühle gemäß dem bekannten Stand der Technik.
Figuren 3 und 4 zeigen jeweils eine Rührwerkskugelmühle mit erfindungsgemäßer Spannvorrichtung.
Figur 5 zeigt einen Detailausschnitt aus Figur 3.
Figur 6 zeigt einen Detailausschnitt aus Figur 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

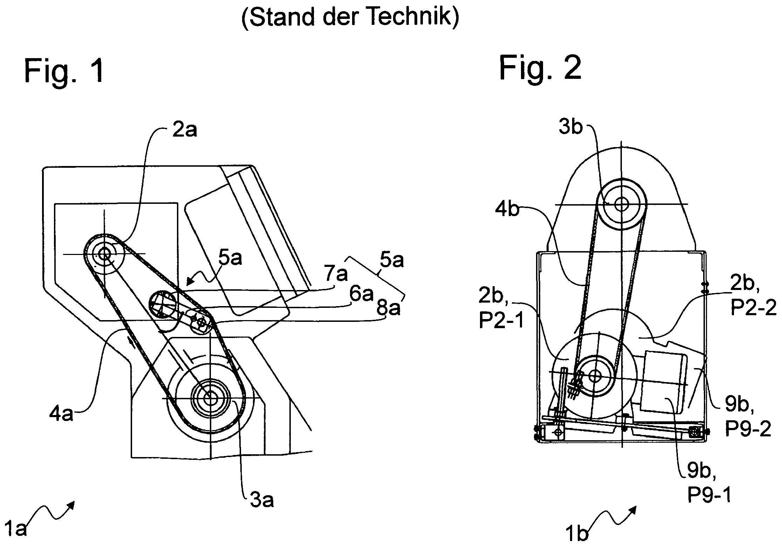

Figur 1 zeigt eine erste Ausführungsform einer Rührwerkskugelmühle 1a mit einer Spannvorrichtung 5a gemäß dem bekannten Stand der Technik. Die Rührwelle 3a der Rührwerkskugelmühle 1a wird über eine Kette oder einen Riemen 4a von einer Antriebswelle 2a angetrieben. Zur Einstellung der benötigten Riemenspannung des Riemens 4a ist die Spannvorrichtung 5a vorgesehen. Diese umfasst einen an einem Spannfuß 7a angeordneten Spannhebel 6a mit einem Spannrad 8a. Um die Spannung des Riemens 4a einzustellen, muss der Benutzer zuerst Fixiermittel (nicht dargestellt) am Spannfuß 7a lockern, um diesen verstellen zu können. Dann muss er mit einem Werkzeug am Spannfuß 7a ansetzen und diesen mit Hilfe des Werkzeugs verdrehen. Die Drehbewegung überträgt sich über den Spannhebel 6a auf das Spannrad 8a, das dadurch in Abhängigkeit von der Drehrichtung mehr oder weniger stark an den Riemen 4a gedrückt wird. Nachdem die gewünschte Riemenspannung erreicht ist, müssen die Fixiermittel durch einen zweiten Benutzer angezogen werden, um den Spannfuß 7a in der neuen Einstellung zu fixieren.

Figur 2 zeigt eine zweite Ausführungsform einer Rührwerkskugelmühle 1b gemäß dem bekannten Stand der Technik. Bei dieser Ausführungsform wird die Riemenspannung des die Rührwelle 3b mit der Antriebswelle 2b verbindenden Riemens 4b dadurch eingestellt, indem der Antrieb 9b beziehungsweise Motor positionsvariabel an der Rührwerkskugelmühle 1b angeordnet ist. Beispielsweise ist ein Schwenkmechanismus oder Ähnliches vorgesehen, so dass der Antrieb 9b unterschiedliche Positionen P9-1, P9-2 einnehmen kann, wodurch die Antriebswelle 2b in unterschiedlichen Positionen P2-1, P2-2 angeordnet wird, wodurch sich die Spannung des Riemens 4b entsprechend ändert.

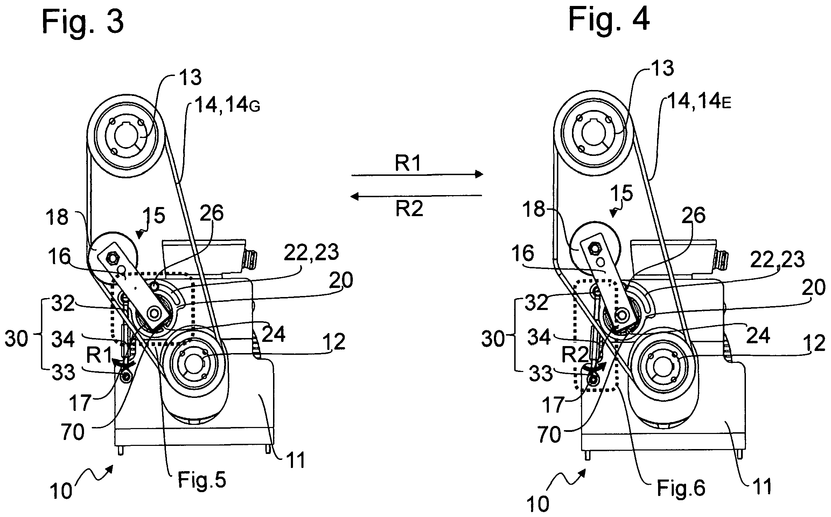

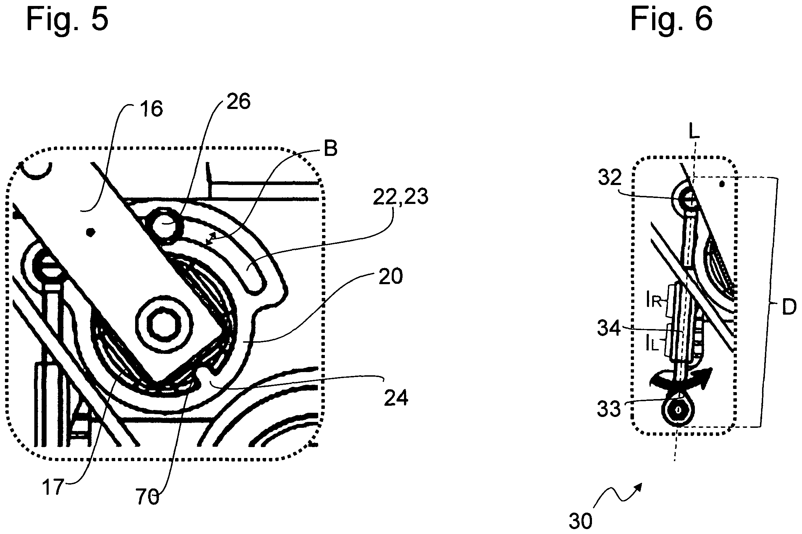

Figuren 3 und 4 zeigen jeweils eine Rührwerkskugelmühle 10 mit erfindungsgemäßer Spannvorrichtung 15, wobei Figur 3 die Rührwerkskugelmühle 10 mit gespanntem Riemen 14G darstellt und Figur 4 die Rührwerkskugelmühle 10 mit entspanntem Riemen 14E zeigt. Figur 5 zeigt einen Detailausschnitt aus Figur 3 und Figur 6 zeigt einen Detailausschnitt aus Figur 4.

Wie aus dem Stand der Technik bekannt, dient auch hier ein Riemen 14 der Übertragung der Antriebsenergie von einer Antriebswelle 12 auf eine Rührwelle 13 der Rührwerkskugelmühle 10.

Bei der erfindungsgemäßen Spannvorrichtung 15 ist der Spannfuß 17, an dem der Spannhebel 16 und daran das Spannrad 18 angeordnet sind, auf oder in einer Verstellscheibe 20 angeordnet. Die Verstellscheibe 20 ist drehbeweglich am Maschinengehäuse 11 der Rührwerkskugelmühle 10 angeordnet. Die Verstellscheibe 20 weist eine Befestigungsnase 24 auf. Diese greift in eine korrespondierend ausgebildete Nut 70 am Spannfuß 17. Dadurch sind der Spannfuß 17 und die Verstellscheibe 20 verdrehsicher miteinander verbunden, d.h. eine Bewegung der Verstellscheibe 20 wird direkt auf den Spannfuß 17 und über den Spannhebel 16 weiter auf das Spannrad 18 übertragen.

Die Verstellscheibe 20 weist eine bogenförmige Führungskulisse beziehungsweise Führungskontur 22 auf. Insbesondere ist die Führungskontur 22 als gebogenes Langloch 23 ausgebildet.

Weiterhin ist ein Fixiermittel 26 vorgesehen, über das die Verstellscheibe 20 verdrehsicher am Maschinengehäuse 11 der Rührwerkskugelmühle 10 festgelegt werden kann. Das Fixiermittel 26 durchdringt die Verstellscheibe 20 im Bereich der Führungskontur 22 und ist weiterhin am Maschinengehäuse 11 befestigt. Als Fixiermittel 26 kann beispielsweise eine Schraube dienen, wobei der Durchmesser des Schraubteils geringer ist als eine Breite B der Führungskontur 22 und wobei der Durchmesser des Schraubenkopfes größer ist als eine Breite der Führungskontur 22 - vergleiche insbesondere Figur 5. Wenn das Fixiermittel 26 gelöst oder zumindest gelockert ist, kann die Verstellscheibe 20 verdreht werden. Ist das Fixiermittel 26 dagegen angezogen oder anderweitig am Maschinengehäuse fixiert, dann ist die Verstellscheibe 20 am Maschinengehäuse 11 festgelegt. Damit sind aber auch der Spannfuß 17 und darüber hinaus der Spannhebel 16 und das Spannrad 18 in ihrer jeweiligen Position fixiert.

Weiterhin ist ein längenvariables Spannmittel 30 vorgesehen. Dieses ist zum einen an der drehbaren Verstellscheibe 20 und zum anderen am Maschinengehäuse 11 der Rührwerkskugelmühle 10 befestigt. Eine Veränderung der Länge D des Spannmittels 30 führt zu einer Drehung der Verstellscheibe 20. Insbesondere bewirkt eine Veränderung der Länge D des Spannmittels 30 eine Positionsänderung der Führungskontur 22 der Verstellscheibe 20 gegenüber dem Maschinengehäuse 11 der Rührwerkskugelmühle 10 und gegenüber dem Fixiermittel 26.

Da die Bewegung der Verstellscheibe 20 über den Spannfuß 17 direkt auf den Spannhebel 16 und das Spannrad 18 übertragen wird, bewirkt ein Verdrehen der Verstellscheibe in eine erste Drehrichtung R1, dass das Spannrad 18 von dem Riemen 14 weg bewegt wird, so dass dieser entspannt wird. Wird die Verstellscheibe 20 dagegen in die Gegenrichtung R2 gedreht, dann bewegt sich das Spannrad 18 in Richtung des Riemens 14. Das Verdrehen der Verstellscheibe in die zweite Gegenrichtung R2 bewirkt, dass das Spannrad 18 in Richtung des Riemens 14 bewegt und somit stärker an den Riemen 14 gedrückt wird.

Das Spannmittel 30 besteht insbesondere aus zwei Augenschrauben 32, 33, die von gegenüberliegenden Seiten in eine Spannhülse 34 greifen. Eine der Augenschrauben, beispielsweise eine erste Augenschraube 32 weist ein Rechtsgewinde auf und die andere, zweite Augenschraube 33 weist ein Linksgewinde auf. Die Spannhülse 34 weist im Bereich eines ersten freien Endes ein erstes rechtsgängiges Innengewinde I_{R} auf und wobei im Bereich eines zweiten freien Endes der Spannhülse 34 ein zweites linksgängiges Innengewinde I_{L} ausgebildet ist. Das erste rechtsgängige Innengewinde I_{R} und das zweite linksgängige Innengewinde I_{L} der Spannhülse 34 sind in einer Flucht auf der Längsachse L der Spannhülse 34 angeordnet.

Durch Drehen der Spannhülse 34 werden die beiden Gewindestangen der Augenschrauben 32, 33 je nach Drehrichtung der Spannhülse 34 zusammengezogen oder voneinander entfernt. Das heißt, die Drehbewegung der Spannhülse 34 wird in eine lineare Stellbewegung des Spannmittels 30 umgewandelt. Da die erste Augenschraube 32 direkt an der drehbar gelagerten Verstellscheibe 20 befestigt ist, überträgt sich die Bewegung des Spannmittels 30 direkt auf die Verstellscheibe 20 und wird dabei insbesondere in eine Drehbewegung der Verstellscheibe 20 umgewandelt. Das heißt, die lineare Stellbewegung des Spannmittels 30 wird in eine Drehbewegung der Verstellscheibe 20 umgewandelt. Insbesondere wird die Verstellscheibe 20 gegenüber dem, der Führungskontur 22 zugeordneten und für den Einstellvorgang gelösten, Fixiermittel 26 verdreht. Nachdem die gewünschte Riemenspannung des Riemens 14 eingestellt ist, wird das Fixiermittel 26 wieder angezogen und somit die Position der Verstellscheibe 20 am Maschinengehäuse 11 der Rührwerkskugelmühle 10 festgelegt und gegen ungewolltes Verdrehen gesichert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Rührwerkskugelmühle
- 2: Antriebswelle
- 3: Rührwelle
- 4: Riemen / Kette
- 5: Spannvorrichtung
- 6: Spannhebel
- 7: Spannfuß
- 8: Spannrad
- 9: Motor
- 10: Rührwerkskugelmühle
- 11: Maschinengehäuse
- 12: Antriebswelle
- 13: Rührwelle
- 14: Riemen / Kette
- 14E: entspannter Riemen / Kette
- 14G: gespannter Riemen / Kette
- 15: Spannvorrichtung
- 16: Spannhebel
- 17: Spannfuß
- 18: Spannrad
- 20: Verstellscheibe
- 22: Führungskontur
- 23: gebogenes Langloch
- 24: Befestigungsnase
- 26: Fixiermittel
- 30: Spannmittel
- 32: erste Augenschraube
- 33: zweite Augenschraube
- 34: Spannhülse
- 70: Nut
- B: Breite
- D: Länge
- I_{L}: zweites linksgängiges Innengewinde
- I_{R}: erstes rechtsgängiges Innengewinde
- L: Längsachse
- P: Position
- R1: erste Drehrichtung
- R2: Gegenrichtung

## Patentansprüche

1. Spannvorrichtung (15) für den Riemen- oder Kettenantrieb einer Rührwerkskugelmühle (10) umfassend einen an einem drehbeweglich ausgebildeten Spannfuß (17) angeordneten Spannhebel (16) mit einem Spannrad (18), wobei an dem drehbeweglichen Spannfuß (17) eine drehbewegliche Verstellscheibe (20) mit Führungskontur (22) angeordnet ist, wobei mittels mindestens eines der Führungskontur (22) der Verstellscheibe (20) zugeordneten Befestigungsmittels (26) die Position der Verstellscheibe (20) an einem Maschinengehäuse (11) festlegbar ist, wobei die Spannvorrichtung (15) ein längenvariables Spannelement (30) zum Verdrehen der Verstellscheibe (20) gegenüber dem Maschinengehäuse (11) der Rührwerkskugelmühle (10) umfasst.

2. Spannvorrichtung (15) nach Anspruch 1, wobei die Verstellscheibe (20) derart an dem drehbeweglichen Spannfuß (17) angeordnet ist, dass eine Drehbewegung der Verstellscheibe (20) unmittelbar mit einer Drehbewegung des Spannfußes (17) gekoppelt ist.

3. Spannvorrichtung (15) nach Anspruch 1 oder 2, wobei das längenvariable Spannelement (30) derart ausgebildet ist, dass eine Drehbewegung am Spannelement (30) in eine lineare Stellbewegung des Spannelements (30) umwandelbar ist.

4. Spannvorrichtung (15) nach Anspruch 3, wobei durch die lineare Stellbewegung des Spannelements (30) eine Drehbewegung der Verstellscheibe (20) und somit eine Drehbewegung des Spannfußes (17), des Spannhebels (16) und des Spannrads (18) erzeugbar ist.

5. Spannvorrichtung (15) nach einem der voranstehenden Ansprüche, wobei das Spannelement (30) eine Spannhülse (34) und zwei Augenschrauben (32, 33) umfasst.

6. Spannvorrichtung (15) nach Anspruch 5, wobei im Bereich eines ersten freien Endes der Spannhülse (34) ein erstes rechtsgängiges Innengewinde (I_{R}) ausgebildet ist und wobei im Bereich eines zweiten freien Endes der Spannhülse (34) ein zweites linksgängiges Innengewinde (I_{L}) ausgebildet ist, wobei das erste rechtsgängige Innengewinde (I_{R}) und das zweite linksgängige Innengewinde (I_{L}) auf gleicher Achse (L) liegend angeordnet sind.

7. Spannvorrichtung (15) nach Anspruch 5 oder 6, wobei eine der Augenschrauben (32) ein Rechtsgewinde aufweist und wobei die andere Augenschraube (33) ein Linksgewinde aufweist.

8. Spannvorrichtung (15) nach einem der Ansprüche 5 bis 7, wobei die Spannhülse (34) durch einen Hohlzylinder gebildet ist.

9. Spannvorrichtung (15) nach einem der Ansprüche 5 bis 7, wobei die Spannhülse (34) aus einem Vollmaterial gefertigt ist und zwei einander gegenüberliegend angeordnete Innengewinde aufweist, insbesondere wobei die gegenüberliegend angeordnete Innengewinde koaxial angeordnet sind.

10. Spannvorrichtung (15) nach einem der voranstehenden Ansprüche, wobei vermittels der Spannvorrichtung (15) der Riemen- oder Kettenantrieb der Rührwerkskugelmühle (10) werkzeugfrei spannbar ist.

11. Spannvorrichtung (15) nach einem der Ansprüche1 bis 9, wobei die Spannhülse (34) vermittels eines geeigneten Werkzeugs einstellbar ist.

12. Rührwerkskugelmühle (10) mit Riemen- oder Kettenantrieb und mit einer Spannvorrichtung (15) nach Anspruch 1.

## Claims

1. A tensioning device (15) for the belt or chain drive of a stirred ball mill (10) comprising a tensioning lever (16) arranged on a rotatably configured tensioning foot (17) comprising a tensioning wheel (18), wherein a rotatable adjusting disk (20) comprising a guide contour (22) is arranged on the rotatable tensioning foot (17), wherein the position of the adjusting disk (20) can be secured on machine housing (11) by means of at least one securing means (26) assigned to the guide contour (22) of the adjusting disk (20), wherein the tensioning device (15) comprises a longitudinally variable tensioning element (30) for rotating the adjusting disk (20) relative to the machine housing (11) of the stirred ball mill (10).

2. The tensioning device (15) according to claim 1, wherein the adjusting disk (20) is arranged on the rotatable tensioning foot (17) in such a way that a rotary motion of the adjusting disk (20) is directly coupled with a rotary motion of the tensioning foot (17).

3. The tensioning device (15) according to claim 1 or 2, wherein the longitudinally variable tensioning element (30) is configured in such a way that a rotary motion on the tensioning element (30) can be converted into a linear adjusting movement of the tensioning element (30).

4. The tensioning device (15) according to claim 3, wherein a rotary motion of the adjusting disk (20) and thus a rotary motion of the tensioning foot (17), of the tensioning lever (16) and of the tensioning wheel (18) can be generated by means of the linear adjusting motion of the tensioning element (30).

5. The tensioning device (15) according to one of the preceding claims, wherein the tensioning element (30) comprises a tension sleeve (34) and two eye bolts (32, 33) .

6. The tensioning device (15) according to claim 5, wherein a first, right-handed internal thread (I_{R}) is configured in the area of a first free end of the tension sleeve (34) and wherein a second, left-handed internal thread (I_{L}) is configured in the area of a second free end of the tension sleeve (34), wherein the first, right-handed internal thread (I_{R}) and the second, left-handed internal thread (I_{L}) are arranged to be positioned on the same axis (L).

7. The tensioning device (15) according to claim 5 or 6, wherein one of the eye bolts (32) has a right-handed thread and wherein the other eye bolt (33) has a left-handed thread.

8. The tensioning device (15) according to one of claims 5 to 7, wherein the tension sleeve (34) is formed by a wooden cylinder.

9. The tensioning device (15) according to one of claims 5 to 7, wherein the tension sleeve (34) is made of a solid material and has two internal threads arranged opposite one another, in particular wherein the internal threads arranged opposite one another are arranged coaxially.

10. The tensioning device (15) according to one of the preceding claims, wherein the belt or chain drive of the stirred ball mill (10) can be tensioned without tools by means of the tensioning device (15).

11. The tensioning device (15) according to one of claims 1 to 9, wherein the tension sleeve (34) can be adjusted by means of a suitable tool.

12. A stirred ball mill (10) comprising belt or chain drive and comprising a tensioning device (15) according to claim 1.

## Revendications

1. Dispositif de serrage (15) pour une transmission à courroie ou à chaîne d'un broyeur agitateur à billes (10) comportant un levier de serrage (16) disposé sur un pied de serrage (17) formé de façon mobile en rotation, avec une roue de serrage (18), dans lequel un disque de réglage (20) avec un contour de guidage (22) est disposé sur le pied de serrage (17) mobile en rotation, dans lequel la position du disque de réglage (20) sur un boîtier de machine (11) peut être fixée à l'aide d'au moins un moyen de fixation (26) attribué au contour de guidage (22) du disque de réglage (20), dans lequel le dispositif de serrage (15) comporte un élément de serrage de longueur variable (30) pour la rotation du disque de réglage (20) par rapport au boîtier de machine (11) du broyeur agitateur à billes (10).

2. Dispositif de serrage (15) selon la revendication 1, dans lequel le disque de réglage (20) est disposé de telle façon sur le pied de serrage (17) mobile en rotation, qu'un mouvement de rotation du disque de réglage (20) est directement couplé à un mouvement de rotation du pied de serrage (17).

3. Dispositif de serrage (15) selon la revendication 1 ou 2, dans lequel l'élément de serrage de longueur variable (30) est conçu de telle façon qu'un mouvement de rotation sur l'élément de serrage (30) peut être transformé en un mouvement de réglage linéaire de l'élément de serrage (30).

4. Dispositif de serrage (15) selon la revendication 3, dans lequel le mouvement de réglage linéaire de l'élément de serrage (30) permet de produire un mouvement de rotation du disque de réglage (20) et par conséquent un mouvement de rotation du pied de serrage (17), du levier de serrage (16) et de la roue de serrage (18) .

5. Dispositif de serrage (15) selon l'une des revendications précédentes, dans lequel l'élément de serrage (30) comporte une douille de serrage (34) et deux boulons à oeillet (32, 33).

6. Dispositif de serrage (15) selon la revendication 5, dans lequel un premier filetage intérieur à droite (I_{R}) est formé dans la région d'une première extrémité libre de la douille de serrage (34) et dans lequel un deuxième filetage intérieur à gauche (I_{L}) est formé dans la région d'une deuxième extrémité libre de la douille de serrage (34), dans lequel le premier filetage intérieur à droite (I_{R}) et le deuxième filetage intérieur à gauche (I_{L}) sont disposés de manière à s'étendre sur le même axe (L).

7. Dispositif de serrage (15) selon la revendication 5 ou 6, dans lequel l'un des boulons à oeillet (32) présente un filetage à droite et dans lequel l'autre boulon à oeillet (33) présente un filetage à gauche.

8. Dispositif de serrage (15) selon l'une des revendications 5 à 7, dans lequel la douille de serrage (34) est formée par un cylindre creux.

9. Dispositif de serrage (15) selon l'une des revendications 5 à 7, dans lequel la douille de serrage (34) est fabriquée en un matériau plein et présente deux filetages intérieurs disposés l'un en face de l'autre, en particulier dans lequel les filetages intérieurs disposés l'un en face de l'autre sont disposés de façon coaxiale.

10. Dispositif de serrage (15) selon l'une des revendications précédentes, dans lequel la transmission à courroie ou à chaîne du broyeur agitateur à billes (10) peut être serrée sans outil grâce au dispositif de serrage (15).

11. Dispositif de serrage (15) selon l'une des revendications 1 à 9, dans lequel la douille de serrage (34) peut être réglée à l'aide d'un outil approprié.

12. Broyeur agitateur à billes (10) comprenant une transmission à courroie ou à chaîne et un dispositif de serrage (15) selon la revendication 1.
